Europäisches Patentamt

European Patent Office

Office européen des brevets

(19)

(11) Publication number: **0 271 948**

**A2**

(12)

# EUROPEAN PATENT APPLICATION

(21) Application number: 87202395.7

(51) Int. Cl.⁴: **H04M 9/08**

(22) Date of filing: 02.12.87

(30) Priority: 16.12.86 BE 2061114

(43) Date of publication of application:
22.06.88 Bulletin 88/25

(84) Designated Contracting States:
AT CH DE ES FR GB IT LI NL SE

(71) Applicant: Alcatel N.V.
Strawinskylaan 537 (World Trade Center)
NL-1077 XX Amsterdam(NL)

(72) Inventor: Moons, Elve Desiderius Jozef
Vandermarckestraat 27
B-3920 Lummen(BE)
Inventor: Cannaerts, Jozef Dirk Guido Leonie
Baron de Celleslaan 75
B-2520 Edegem(BE)

(74) Representative: Vermeersch, Robert et al
BELL TELEPHONE MANUFACTURING
COMPANY Naamloze Vennootschap Patent
Department Francis Wellesplein 1
B-2018 Antwerp(BE)

(54) Telecommunication circuit.

(57) Telecommunication circuit (BNR) forming part of
the transmitter circuit of a telecommunication device,
the transmitter circuit including an electrodynamic
microphone. The circuit (BNR) includes a compara-
tor circuit (COC), a control circuit (CDC) connected
in series therewith and a potentiometer circuit (R1,
R2, NM1) controlled by this control circuit. The AC
signal part (S) of the microphone input signal is
compared with two thresholds (-V1, +V1) delimiting
the background noise region, and the resulting signal
controls the potentiometer circuit in such a way that
attenuation is produced when the AC signal part falls
in this region.

EP 0 271 948 A2

# TELECOMMUNICATION CIRCUIT

The present invention relates to a telecommunication circuit including a transmitter circuit wherein an electrodynamic microphone is coupled with a transmission medium.

Such a telecommunication circuit is generally known in the art, for instance from British patent application No 8317706 (P.F. Blomley et al 11-7-3-1). Contrary to a carbon microphone an electrodynamic microphone has the disadvantage of being sensitive to background noise so that this noise is transferred by the transmitter circuit on the transmission medium and has a hindering effect.

An object of the present invention is to provide a telecommunication circuit of the above type, but which does not present this drawback.

According to the invention this object is achieved due to the fact that in said transmitter circuit said electrodynamic microphone is coupled with said transmission medium via a signal attenuation circuit which attenuates the AC voltage signal produced by said microphone when it does not exceed at least a predetermined threshold.

Another characteristic feature of the present telecommunication circuit is that said signal attenuation circuit attenuates said AC voltage signal when it is comprised between two predetermined first and second thresholds.

Still another characteristic feature of the telecommunication circuit is that said theresholds delimit the region within which background noise is comprised.

Thus the background noise is attenuated to such an extent that it does no longer constitute a hindrance.

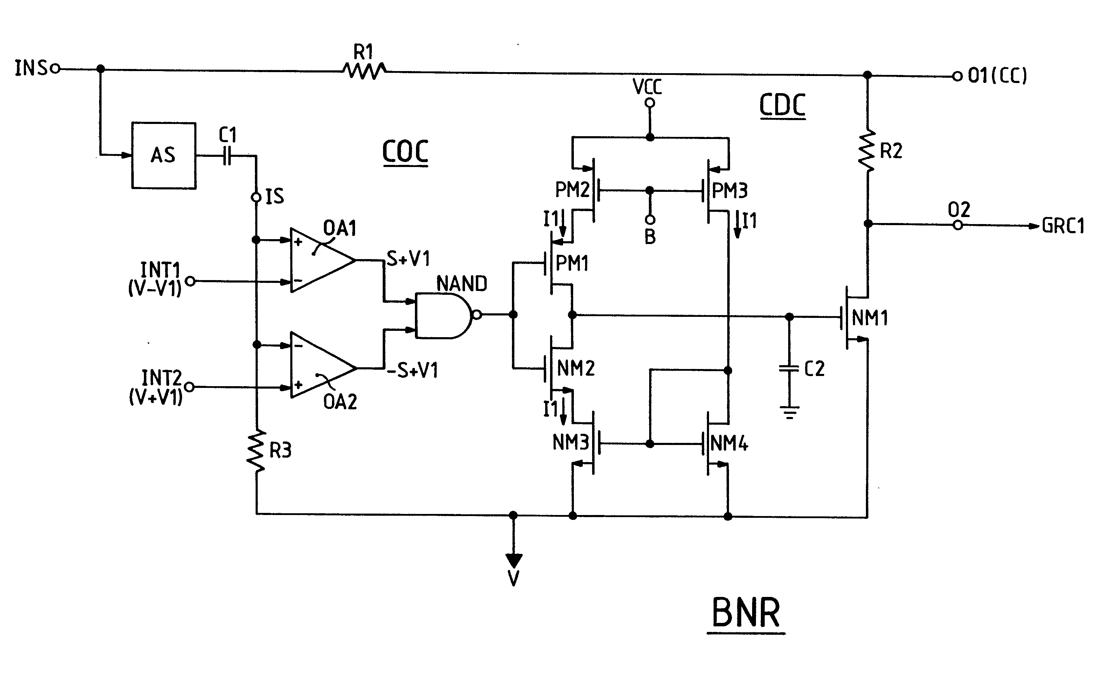

The above mentioned and other objects and features of the invention will become more apparent and the invention itself will be best understood by referring to the following description of an embodiment taken in conjunction with the accompanying drawing which represents a telecommunication circuit according to the invention.

This circuit operates with the supply voltages VCC, V and B is used as background noise reduction circuit in the copending patent application of even date entitled "Telecommunication device and circuits used therein" (E. Moons - J. Cannaerts 3-2). This device is coupled to an exchange via a line, one of the conductors of which is represented in the drawing by the usual ground symbol, and includes a transmitter circuit wherein an electrodynamic microphone is coupled to the line via amplifier circuits. VCC is a regulated voltage, V is a DC reference voltage which is represented by a triangle and B is a constant bias voltage.

The circuit shown has a signal input terminal INS on which an AC voltage signal S superposed on a DC voltage signal V and an offset DC voltage signal v, produced by operational amplifier circuits used, is supplied from the above mentioned microphone and amplifier circuits (both not shown), two references input terminals INT1 and INT2 to which respective threshold signals V-V1 and V+V1 are applied, and two output terminals 01 and 02 which as shown in the above mentioned patent application are for instance connected to an attenuator circuit CC and to a gain control circuit GRC1. V1 and -V1 are constant voltage thresholds which are chosen in such a way that the background noise is located between them. The signal input terminal INS is connected, on the one hand to the output terminal 01 via the resistance R1 and on the other hand, via the amplifier circuit AS and the DC blocking capacitor C1 in series, to the signal input IS of the comparator circuit COC. The series resistance R1 constitutes together with resistance R2 and NMOS transistor switch NM1 which are connected in series between terminal 01 and V a controlled voltage divider. Transistor NM1 is controlled from the inputs IS, INT1 and INT2 via the series connection of the comparator circuit COC and a capacitor charging and discharging circuit CDC.

Comparator circuit COC includes operational amplifiers OA1 and OA2 having outputs which constitute the inputs of a NAND-gate NAND whose output is the input of COC. The non-inverting input of OA1 and the inverting input of OA2 constitute the signal input IS which is connected to V via resistance R3. The inverting input of OA1 and the non-inverting input of OA2 constitute the respective inputs INT1 and INT2.

In the capacitor charging and discharging circuit CDC, capacitor C2 is connected between ground and the junction point of the gate electrode of NM1 and the drain electrodes of PMOS transistor PM1 and NMOS transistor NM2 whose gate electrodes are controlled by the output signal of NAND-gate NAND. The capacitor charging circuit includes the series connection between VCC and ground of the drain-to-source paths of PM2 and PM1 and capacitor C2. The capacitor discharging circuit includes the series connection between ground and V of capacitor C2 and the drain-to-source paths of NMOS transistors NM2 and NM3. The circuit CDC includes finally a current source which produces a constant current I1 and which is constituted by PMOS transistor PM3 whose source and gate electrodes are connected to VCC and B respectively and whose drain electrode is connected to V via the drain-to-source path of NMOS transistor NM4. This transistor NM3 is connected as a diode because its drain and gate electrodes are short-circuited. The gate electrodes of PM3 and NM4 are connected to those of PM2 and NM3 which constitute current mirrors for the current I1.

The circuit operates as follows :

When the above mentioned input signal S + V + v is applied to input terminal INS it is supplied, on the one hand to output terminal 01 via resistance R1 and on the other hand to signal terminal IS of the comparator circuit via amplifier circuit AS and capacitor C1 in series. By C1 the DC voltage portion, i.e. V + v, is eliminated from the input signal, but by the connection of terminal IS with V via R3, V is again added to S. Hence, the signal applied to IS is S + V. In OA1 and OA2 this signal S + V compared with V - V1 and V + V1 respectively, so that the output signal of OA1 is equal to 1 when S > -V1 and to 0 when S < -V1, whilst that of OA2 is equal to 1 when S < V1 and to 0 when S > V1.

This means that the output signal VNAND of the gate NAND is 0 when the AC signal S is comprised between -V1 and +V1, and is 1 when it is either larger than V1 or smaller than -V1.

In the first case transistor PM1 becomes conductive, so that capacitor C2 charges between VCC and ground via transistors PM2 and PM1. The charge takes place in a linear way because the charge current I1 is constant. When the gate-to-source voltage of NM1 exceeds the threshold voltage thereof, this transistor becomes conductive so that R2 is then connected between terminal 01 and V and that the AC voltage signal S is attenuated.

If the output signal of NAND is 1, transistor NM2 becomes conductive so that capacitor C2 then discharges to V via transistors NM2 and NM3. This discharge is also linear because the discharge current I1 is constant. When the gate-to-source voltage of NM1 decreases below the threshold voltage thereof, this transistor is blocked so that the connection between R2 and V is then interrupted and that the AC voltage input signal S is then not attenuated.

While the principles of the invention have been described above in connection with specific apparatus, it is to be clearly understood that this description is made only by way of example and not as a limitation on the scope of the invention.

## Claims

1. Telecommunication circuit including a transmitter circuit wherein an electrodynamic microphone is coupled with a transmission medium, characterized in that in said transmitter circuit said electrodynamic microphone is coupled with said transmission medium via a signal attenuation circuit which attenuates the AC voltage signal (S) produced by said microphone when it does not exceed at least a predetermined threshold (-V1, +V1).

2. Telecommunication circuit according to claim 1, characterized in that said signal attenuation circuit attenuates said AC voltage signal (S) when it is comprises between two predetermined first (-V1) and second (+V1) thresholds.

3. Telecommunication circuit according to claim 2, characterized in that said thresholds (-V1, +V1) delimit the region within background noise is comprised.

4. Telecommunication circuit according to claim 2, characterized in that said signal attenuation circuit is constituted by a comparator circuit (COC), by a control circuit (CDC) connected in series therewith, and by a potentiometer circuit (R1, R2, NM1) controlled by said control circuit, said signal (S) being supplied to said comparator circuit and to said potentiometer, said signal being compared in said comparator circuit (COC) with said thresholds (-V1, +V1) and the output signal of said comparator circuit (COC) controlling said potentiometer (R1, R2, NM2) via said control circuit, and an output signal of the circuit being produced on an output constituted by a tapping point (01) of the potentiometer.

5. Telecommunication circuit according to claim 4, characterized in that said comparator circuit (COC) comprises two operational amplifiers (OA1, OA2) wherein said signal (S) is compared with said first (-V1) and second (+V1) thresholds respectively, and a gating circuit (NAND) which is controlled by the output signals (S + V, S - V1) of said amplifiers and produces said output signal of the one (0) or other (1) binary value depending on the signal (S) not exceeding or exceeding said thresholds respectively.

6. Telecommunication circuit according to claim 4, characterized in that said control circuit (CDC) comprises a capacitance charging and discharging circuit of which the charging circuit and the discharging circuit are operated by said one (0) and other (1) binary value respectively and the charge of the capacitance (C2) controlling a switch (NM1) of said potentiometer circuit (R1, R2, NM2).

7. Telecommunication circuit according to claim 6, characterized in that in said capacitance charging and discharging circuit the charge or discharge of the capacitance (C2) occurs via a first (PM2/1) and a second (NM2/3) constant current source respectively which are both connected to a plate of said capacitance (C2).

8. Telecommunication circuit according to claim 7, characterized in that said potentiometer circuit comprises the series connection of two resistances (R1, R2) and a switch which is a transistor switch (NM1), the output of the circuit being the junction point (01) of said resistance and the control input of said transistor switch being connected to said plate of said capacitance (C2).

INS○

R1

O1(CC)

VCC

CDC

COC

AS

C1

IS

OA1

INT1
(V−V1)

S+V1

NAND

INT2
(V+V1)

−S+V1

OA2

R3

PM2

PM3

B

I1

I1

PM1

NM1

NM2

C2

I1

NM3

NM4

R2

O2

GRC1

V

BNR

0 271 948